# EUROPÄISCHE PATENTSCHRIFT

(11) **EP 1 896 209 B1**
(45) Veröffentlichungstag und Bekanntmachung des Hinweises auf die Patenterteilung: **24.02.2010**
(21) Anmeldenummer: 06762093.0
(22) Anmeldetag: 20.06.2006
(51) Int. Cl.: B23C 3/05, B23D 77/14, B23D 77/04

(54) **VENTILSITZ- UND VENTILFÜHRUNGSBEARBEITUNGSWERKZEUG**
VALVE SEAT AND VALVE GUIDE MACHINING TOOL
OUTIL D'USINAGE DE SIEGE DE SOUPAPE ET DE GUIDE DE SOUPAPE

(30) Priorität: 20.06.2005 DE 102005028368
(43) Veröffentlichungstag der Anmeldung: 12.03.2008
(73) Patentinhaber: MAPAL Fabrik für Präzisionswerkzeuge Dr. Kress KG, D-73431 Aalen (DE)
(72) Erfinder: KRESS, Dieter, 73431 Aalen (DE)
(74) Vertreter: Gleiss & Grosse
(86) Internationale Anmeldenummer: PCT/EP2006/005886
(87) Internationale Veröffentlichungsnummer: WO 2006/136361

(56) Entgegenhaltungen:
- WO-A-03/013771
- DE-A1- 2 610 386
- DE-A1- 3 314 349

## Beschreibung

Die Erfindung betrifft ein Ventilsitz- und Ventilführungsbearbeitungswerkzeug zur Feinbearbeitung von Ventilsitz und -führung in einem Zylinderkopf einer Brennkraftmaschine gemäß Oberbegriff des Anspruchs 1. Ein solches Werkzeug ist aus der WO 03/013771 A1 bekannt und ist als nächstliegender Stand der Technik angesehen.

Es hat sich herausgestellt, dass bei der Bearbeitung von Ventilsitz und Ventilführung im Zylinderkopf einer Brennkraftmaschine einerseits die Oberflächenqualität im Bereich der Ventilführung und andrerseits die Koaxialität zwischen Ventilsitz und Ventilführung von großer Bedeutung sind. Dabei ist die Koaxialität ein wesentliches Kriterium für die Dichtheit und damit für den Verbrauch der Brennkraftmaschine. Die Qualität des Oberflächenbereichs der Ventilführung ist wesentlich für einen verschleißarmen Betrieb der Brennkraftmaschine. Bei einem bekannten Werkzeug sind zwei Teilwerkzeuge vorgesehen, von denen ein erstes der Ventilsitzbearbeitung und ein zweites der Ventilführungsbearbeitung zugeordnet ist. Die beiden Teilwerkzeuge sind über eine Präzisionsschnittstelle miteinander verbunden, wobei ein Teilwerkzeug einen Kurzkegel und das andere eine kegelförmige Aufnahme für den Kurzkegel aufweist. Beide Teilwerkzeuge weisen im Bereich der Präzisionsschnittstelle Planflächen auf, die senkrecht zur Mittelachse des Werkzugs angeordnet sind. Durch die Präzisionsschnittstelle wird die absolut koaxiale Anordnung der beiden Teilwerkzeuge zueinander sichergestellt. Sie bewirkt eine deutliche Steigerung der Steifheit des Werkzeugs, so dass eine Durchbiegung im Bereich des zweiten Teilwerkzeugs reduziert wird. Die Oberflächenqualitäten von Ventilsitz und -führung werden dadurch noch erhöht, dass bei der Feinbearbeitung der genannten Bereiche auftretende Schwingungen innerhalb des Werkzeugs durch die Präzisionsschnittstelle unterbrochen und damit stark gedämpft werden. Durch die Wahl unterschiedlicher Materialien für die beiden Teilwerkzeuge werden die Schwingungen auch weiter reduziert. Dabei wird für das der Ventilsitzbearbeitung dienende erste Teilwerkzeug Stahl und für das der Ventilführungsbearbeitung dienende zweite Teilwerkzeug Hartmetall verwendet. Es hat sich gezeigt, dass in einigen Fällen die Oberflächenqualität im Bereich der Ventilführung nicht ausreichend ist und sich ein relativ hoher Verschleiß des zweiten Teilwerkzeugs einstellt.

Aufgabe der Erfindung ist es daher, ein Ventilsitz- und Ventilführungsbearbeitungswerkzeug zur Feinbearbeitung von Ventilsitz und - führung in einem Zylinderkopf einer Brennkraftmaschine zu schaffen, das diesen Nachteil nicht aufweist.

Zur Lösung dieser Aufgabe wird ein daher, ein Ventilsitz- und Ventilführungsbearbeitungswerkzeug vorgeschlagen, das die in Anspruch 1 genannten Merkmale aufweist. Das Werkzeug umfasst wiederum zwei Teilwerkzeuge, von denen eines der Bearbeitung des Ventilsitzes und ein weiteres der Bearbeitung der Ventilführung zugeordnet ist. Dabei ist das erste, der Ventilsitzbearbeitung dienende Werkzeug wiederum aus Stahl hergestellt. Das Werkzeug zeichnet sich jedoch dadurch aus, dass das zweite Teilwerkzeug geteilt ist und zwei Abschnitte aufweist, von denen nur einer aus Hartmetall besteht, nämlich der erste Abschnitt, der der Präzisionsschnittstelle zugeordnet ist. Der zweite Abschnitt des zweiten Teilwerkzeugs besteht aus einem Material, das elastischer ist als das des ersten Abschnitts. Es ist also möglich, dass der zweite Abschnitt des zweiten Teilwerkzeugs sich aufgrund seiner Elastizität optimal an die Oberfläche der Ventilführung anlegt, wodurch ein rascher Verschleiß des zweiten Teilwerkzeugs vermieden und die Oberflächenqualität der Ventilsitzführung wesentlich verbessert wird.

Bevorzugt wird ein Ausführungsbeispiel des Werkzeugs, das sich dadurch auszeichnet, dass der zweite Abschnitt aus Stahl oder Schwermetall besteht. Diese Materialien zeichnen sich durch eine höhere Elastizität als Hartmetall aus, so dass sich das zweite Teilwerkzeug im Bereich des zweiten Abschnitts besser an die Oberfläche der Ventilführung anlegen kann. Dabei ergibt sich noch der zusätzliche Vorteil, dass das Material des zweiten Abschnitts leichter bearbeitbar ist als das des ersten Abschnitts.

Weitere Ausgestaltungen ergeben sich aus den übrigen Unteransprüchen.

Die Erfindung wird im Folgenden anhand der Zeichnung näher erläutert. Es zeigen:
- Figur 1: eine Prinzipskizze eines Ventilsitz- und Ventilführungsbearbeitungswerkzeugs in Seitenansicht als Explosionsdarstellung;
- Figur 2: eine Seitenansicht eines Teilwerkzeugs des in Figur 1 dargestellten Werkzeugs und
- Figur 3: eine vergrößerte Stirnansicht des Teilwerkzeugs gemäß Figur 2.

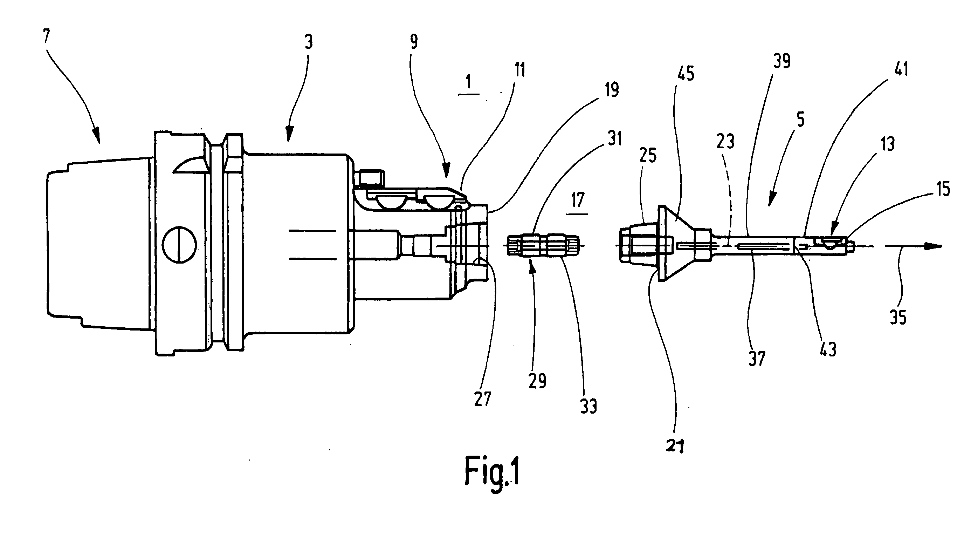

Figur 1 zeigt ein im Folgenden als Werkzeug 1 bezeichnetes Ventilsitz- und Ventilführungsbearbeitungswerkzeug, das zwei Teilwerkzeuge aufweist, nämlich ein erstes, der Ventilsitzbearbeitung dienendes Teilwerkzeug 3 und ein zweites, der Ventilführungsbearbeitung dienendes Teilwerkzeug 5. Das erste Teilwerkzeug 3 weist hier einen Schaft 7 auf, der dazu dient, das Werkzeug 1 mit einer Werkzeugmaschine zu verbinden. Er ist entsprechend ausgebildet und hier beispielhaft mit einer konischen Außenfläche versehen. Es umfasst weiterhin eine Messerplatte 9 mit einer Schneide 11, die der Bearbeitung eines Ventilsitzes dient.

Das zweite Teilwerkzeug 5 weist ebenfalls eine Messerplatte 13 auf, die eine geometrisch bestimmte Schneide 15 umfasst.

Die Verbindung der beiden Teilwerkzeuge 3 und 5 erfolgt über eine Präzisionsschnittstelle 17, die als Kurzkegelverbindung ausgebildet ist und eine erste Planfläche 19 am ersten Teilwerkzeug 3 und eine zweite Planfläche 21 am zweiten Teilwerkzeug 5 aufweist. Die Planflächen sind senkrecht angeordnet zur Dreh- und Mittelachse 23 des Werkzeugs 1. Die Präzisionsschnittstelle 17 umfasst einerseits einen Kegel und andererseits eine den Kegel aufnehmende Ausnehmung. Dabei ist hier vorgesehen, dass der Kegel 25 am zweiten Teilwerkzeug 5 und die kegelförmig ausgebildete Ausnehmung 27 am ersten Teilwerkzeug 3 vorgesehen ist.

In der Explosionsdarstellung ist eine Spannschraube 29 wiedergegeben, die mit einem ersten Gewindeabschnitt 31 versehen ist, der in das erste Teilwerkzeug 3 eingreift, außerdem mit einem zweiten Gewindeabschnitt 33, der in das zweite Teilwerkzeug 5 eingreift. Die Gewindeabschnitte 31, 33 umfassen gegenläufige Gewinde. Wird die Spannschraube 29 in eine erste Richtung gedreht, werden die beiden Teilwerkzeuge 3 und 5 im Bereich der Präzisionsschnittstelle 17 miteinander verspannt, wobei der Kegel 25 in die Ausnehmung 27 hineingezogen wird und die Planflächen 19 und 21, die hier als Ringflächen ausgebildet sind, fest aneinander anliegen.

Bei einer Drehung der Spannschraube 29 in der entgegengesetzten Richtung, werden die beiden Teilwerkzeug 3 und 5 auseinander gedrückt, so dass die Klemmkräfte zwischen Kegel 25 und Ausnehmung 27 gelöst werden.

Bei der Feinbearbeitung von Ventilsitz und -führung im Zylinderblock einer Brennkraftmaschine werden die beiden Teilwerkzeuge 3 und 5 durch die Präzisionsschnittstelle 17 fest miteinander verspannt, wodurch sich eine hohe Steifigkeit des Werkzeugs 1 ergibt, außerdem eine absolut genaue Lagepositionierung der Teilwerkzeuge 3 und 5 zueinander.

Das zweite Teilwerkzeug 5 ist als Reibahle ausgebildet, die der Bearbeitung der Ventilführung dient. Das erste Teilwerkzeug 3 dient der Bearbeitung des Ventilsitzes. Daher ist die Schneide 11 der Messerplatte 9 des ersten Teilwerkzeugs unter einem Winkel zur Mittelachse 23 geneigt. Sie fällt im Übrigen in Richtung der durch einen Pfeil 35 angedeuteten Vorschubrichtung des Werkzeugs ab.

Im Bereich des zweiten Teilwerkzeugs 5 ist mindestens eine Führungsleiste 37 vorgesehen, über die sich das zweite Teilwerkzeug 5 an der Oberfläche einer Ventilsitzführung abstützt, während diese mittels der Schneide 15 der Messerplatte 3 bearbeitet wird.

Es sei hier noch darauf hingewiesen, dass die Schneiden 11 und 15 der Messerplatten 9 und 13 auch unmittelbar am Grundkörper der Teilwerkzeuge 3 und 5 vorgesehen werden können. Um aber eine Justierbarkeit der Schneiden zu gewährleisten, sind diese, wie hier dargestellt, vorzugsweise Teil einer Messerplatte, die mit einer geeigneten Justiereinrichtung zusammenwirkt.

In Figur 1 ist noch angedeutet, dass das zweite Teilwerkzeug 5 einen ersten Abschnitt 39 und eine zweiten Abschnitt 41 aufweist, die als getrennte Elemente ausgebildet und zusammengefügt sind. Es ist hier lediglich eine Trennlinie 43 zu sehen, die den Berührungsbereich zwischen den beiden Abschnitten 39 und 41 erkennen lässt.

Die Prinzipskizze gemäß Figur 1 zeigt noch, dass das erste Teilwerkzeug 3 einen größeren Außendurchmesser aufweist als das zweite Teilwerkzeug 5. Dieses geht daher von einem zylindrischen Bereich mit kleinem Durchmesser in einen konischen Bereich 45 über, an dem die zweite Planfläche 21 vorgesehen ist. Im Bereich der Planfläche 21 ist der Außendurchmesser des zweiten Teilwerkzeugs 5 wesentlich größer als beispielsweise im Bereich der Trennlinie 43. Die Länge des zylindrischen Bereichs rechts und links dieser Trennlinie 43 wird in Abhängigkeit von der Länge des Führungsbereichs der Ventilführung gewählt.

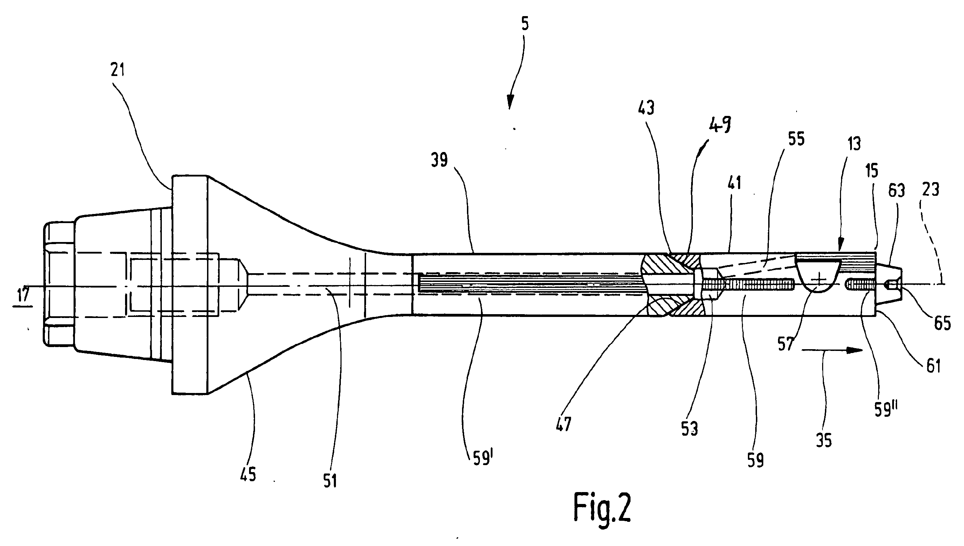

Aus Figur 2 ist das zweite Teilwerkzeug 5 des Werkzeugs 1 in Seitenansicht ersichtlich. Es ist im Teilschnitt wiedergegeben. Gleiche Teile sind mit gleichen Bezugsziffern versehen, so dass insofern auf die Beschreibung zu Figur 1 verwiesen wird.

Das Teilwerkzeug 2 ist vergrößert wiedergegeben, so dass Details besser erkennbar sind als in Figur 1. Deutlich erkennbar ist hier, dass das zweite Teilwerkzeug 5 zwei Abschnitte 39 und 41 aufweist, die auf geeignete Weise miteinander verbunden, hier zusammengelötet sind.

Hier ist deutlich erkennbar, dass der zweite Abschnitt 41 und der an die Trennlinie 43 angrenzende Bereich des ersten Abschnitts 39 eine zylindrische Außenfläche aufweisen, und dass die zylindrische Außenfläche des ersten Abschnitts 39 über einen konischen Bereich 45 in die senkrecht zur Mittelachse verlaufende Planfläche 21 der Präzisionsschnittstelle 17 übergeht.

Durch den Teilschnitt in Figur 2 ist deutlich erkennbar, dass das zweite Teilwerkzeug 5 aus den beiden Abschnitten 39 und 41 zusammengesetzt ist. Diese sind im Bereich der Trennlinie 43 nicht stumpf aneinander gesetzt. Vielmehr weist einer der Abschnitte einen Vorsprung und der andere eine entsprechende Ausnehmung auf, in die der Vorsprung eingreift. Hier ist vorgesehen, dass der erste Abschnitt 39 in dem durch die Trennlinie 43 angedeuteten Verbindungsbereich einen kegelförmigen beziehungsweise kegelstumpfförmigen Vorsprung 47 aufweist, der in eine entsprechend kegelförmige beziehungsweise kegelstumpfförmige Ausnehmung 49 im zweiten Abschnitt 41 eingreift. Der Vorsprung 47 ist vorzugsweise in die Ausnehmung 49 eingelötet.

Das zweite Teilwerkzeug 5 weist einen hier konzentrisch zur Mittelachse 23 verlaufenden Kühl-/Schmiermittelkanal 51 auf, über den ein Kühl-/Schmiermittel der Schneide 15 der Messerplatte 13 zugeführt wird. Der Kühl-/Schmiermittelkanal 51 verläuft durch den ersten Abschnitt 39 und mündet in einer Verteilerkammer 53, die hier an die Ausnehmung 49 im zweiten Abschnitt 41 anschließt. Von dieser geht ein Kanal 55 aus, der gegenüber der Mittelachse 23 von der Verteilerkammer 53 aus in Richtung der durch den Pfeil 35 angedeuteten

Vorschubrichtung ansteigt und Kühl-/Schmiermittel in den Bereich der Schneide 15 fördert.

Die Messerplatte 13 wird durch eine Spannpratze 57 gehalten, die über eine Schraube im Grundkörper des zweiten Abschnitts 41 gehalten wird. Üblicherweise werden hier Spannschrauben verwendet, die bekannt und daher hier nicht dargestellt sind.

Das zweite Teilwerkzeug 5 weist mindestens eine Führungsleiste 59 auf. Hier ist vorgesehen, dass die beiden Abschnitte 39 und 41 jeweils eigene Führungsleisten aufweisen. Die erste Führungsleiste 59 im Bereich des zweiten Abschnitts 41 setzt sich jenseits der Trennlinie 43 in der Führungsleiste 59' des ersten Abschnitts 39 fort. Es ist hier vorgesehen, dass die erste Führungsleiste 59 schmaler ist als die Führungsleiste 59'. Figur 2 lässt noch erkennen, dass sich die erste Führungsleiste 59 jenseits der Spannpratze 57 nach einer Unterbrechung rechts fortsetzt und damit ein Führungsleistenelement 59" umfasst.

Auf die Stirnseite 61 des zweiten Teilwerkzeugs 5 ist ein Zentrierelement 63 aufgesetzt, das eine Zentrierbohrung 65 umfasst. Diese dient der Bearbeitung des Werkzeugs 1 beziehungsweise des zweiten Teilwerkzeugs 5 bei der Werkzeugherstellung und im Rahmen von Reparaturen. Zentrierbohrungen der hier angesprochenen Art sind bekannt, so dass hier nicht näher darauf eingegangen wird.

Die erste Führungsleiste 59 des zweiten Abschnitts 41 und die entsprechende Führungsleiste 59' im Bereich des ersten Abschnitts 39 sowie das Führungsleistenelement 59", das die Verlängerung der ersten Führungsleiste 59 bildet, erstrecken sich parallel zur Mittelachse 23 des Werkzeugs 1 und liegen damit in einer Linie. Sie sind in dem dem Betrachter am nächsten liegenden Bereich der Umfangsfläche des zweiten Teilwerkzeugs 5 angeordnet.

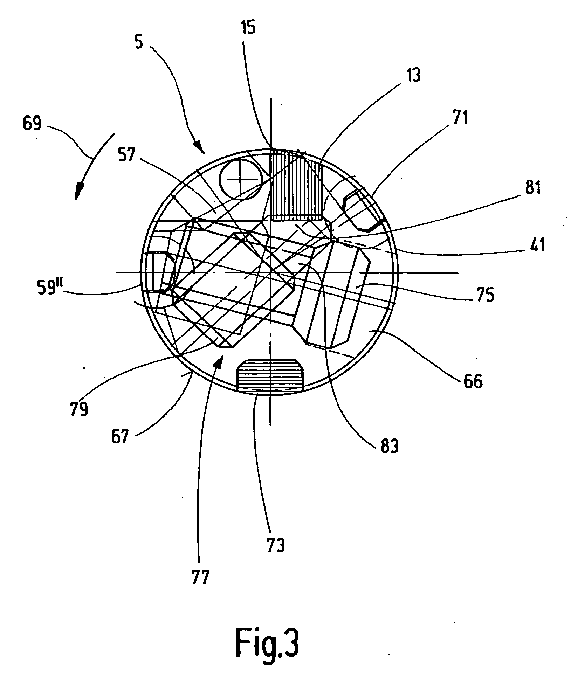

Figur 3 zeigt, das zweite Teilwerkzeug 5 in Draufsicht, das heißt eine Ansicht der Stirnseite 61. Gleiche Teile sind mit gleichen Bezugsziffern versehen, so dass insofern auf die Beschreibung der vorangegangenen Figuren verwiesen wird. Aus Gründen der besseren Darstellbarkeit ist das Zentrierelement 63 weggelassen.

Figur 3 zeigt deutlich, dass der zweite Abschnitt 41 des zweiten Teilwerkzeugs 5 einen Grundkörper 66 aufweist, in den die Messerplatte 13 mit der Schneide 15 eingesetzt ist. Ebenso ist die erste Führungsleiste, von der hier das Führungsleistenelement 59" erkennbar ist, in die Umfangsfläche 67 des zweiten Teilwerkzeugs 5 eingesetzt. In der durch einen Pfeil 69 angedeuteten Drehrichtung des Werkzeugs gesehen, eilt das Führungsleistenelement 59" der Schneide 15 um 270° nach. Eine weitere Führungsleiste 71 eilt der Schneide um ca. 45° nach. Schließlich ist eine dritte Führungsleiste 73 vorgesehen, die der Schneide 15 diametral gegenüber liegt.

In Figur 3 ist durch Striche die Spannpratze 57 angedeutet, die durch eine Spannschraube 75 am Grundkörper des zweiten Teilwerkzeugs 5 festgespannt wird. Schließlich zeigt Figur 3 noch eine Justiereinrichtung 77, mit deren Hilfe der Überstand der Schneide 15 über der Umfangsfläche 17 einstellbar ist, also der radiale Überstand der Schneide 15. Die Justiereinrichtung 77 weist eine Stellschraube 79 auf, die mit der der Schneide 15 gegenüberliegenden Unterseite der Messerplatte 13 zusammenwirkt, dies hier nicht direkt, sondern über einen Stellkeil 83.

Justiereinrichtungen 77 der hier angesprochenen Art sind grundsätzlich bekannt, so dass hier nicht näher darauf eingegangen wird.

Bei dem Werkzeug 1 ist vorgesehen, dass das erste Teilwerkzeug 3 aus Stahl hergestellt ist. Oben wurde schon darauf hingewiesen, dass das zweite Teilwerkzeug bei bekannten Werkzeugen aus Hartmetall besteht. Hier ist vorgesehen, dass lediglich der erste Abschnitt 39 des zweiten Teilwerkzeugs 5 aus Hartmetall hergestellt wird und dass der zweite Abschnitt 41 aus Stahl oder Schwermetall besteht. Entscheidend ist, dass der zweite Abschnitt 41 des zweiten Teilwerkzeugs 5 aus einem Material besteht, das elastischer ist als das Material des ersten Teilabschnitts 39.

Innerhalb des zweiten Teilwerkzeugs 5 werden also unterschiedliche Materialien verwendet, wobei das Material des zweiten Abschnitts 41 elastischer ist als das des ersten Abschnitts 39. Das Werkzeug 1 zeichnet sich darüber hinaus dadurch aus, dass es leichter bearbeitbar ist. Es ist also möglich, auf relativ kostengünstige Weise im zweiten Abschnitt 41 eine Nut zur Aufnahme der Messerplatte 13 zu realisieren, außerdem eine Ausnehmung, in der die Spannpratze 57 zu liegen kommt. Schließlich können die Spannschraube 75 und die Justiereinrichtung 77 mit den zugehörigen Gewinden relativ einfach in den Grundkörper 66 des zweiten Abschnitts 41 eingebracht werden.

Das zweite Teilwerkzeug 5 zeichnet sich dadurch aus, dass der zweite Abschnitt 41 so elastisch ist, dass er sich an die Oberfläche der Ventilführung anlegen kann. Damit liegen die mindestens eine Führungsleiste des zweiten Führungsabschnitts optimal an der Ventilführungsoberfläche an, während diese mittels der Schneide 15 einer spanenden Feinbearbeitung unterworfen wird. Die optimale Anlage des zweiten Abschnitts 41 an der Ventilführungsoberfläche führt zu einer verbesserten Oberflächenqualität, außerdem zu einem reduzierten Verschleiß der Schneide 15. Darüber hinaus ist es leichter, das Material des zweiten Abschnitts 41, der eben aus Stahl oder Schwermetall und nicht aus Hartmetall besteht, zu bearbeiten um die Messerplatte 13, die Spannpratze 57, die Justiereinrichtung und die Führungsleisten in den Grundkörper des zweiten Abschnitts 41 einzusetzen.

Vorzugsweise ist vorgesehen, dass der Schneide 15 wenigstens eine Führungsleiste, hier die Führungsleiste 73, diametral gegenüber liegt. Vorteilhafterweise ist auch die der Schneide 15 um ca. 45° nacheilende Führungsleiste 71 vorzusehen, um eine optimale Führung des Werkzeugs in der zu bearbeitenden Ventilführung zu gewährleisten. Schließlich ergibt sich eine besonders gute Führung dadurch, dass noch eine dritte Führungsleiste in der Umfangsfläche 67 des zweiten Abschnitts 41 vorgesehen ist.

## Patentansprüche

1. Ventilsitz- und Ventilführungsbearbeitungswerkzeug zur Feinbearbeitung von Ventilsitz und Ventilführung in einem Zylinderkopf einer Brennkraftmaschine, mit mindestens zwei Teilwerkzeugen (3,5) von denen ein erstes mindestens eine geometrisch bestimmte Schneide (11) aufweist und der Ventilsitzbearbeitung zugeordnet ist, und ein zweites mindestens eine geometrisch bestimmte Schneide (15) aufweist und der Ventilführungsbearbeitung zugeordnet ist, die über eine Präzisionsschnittstelle (17) miteinander verbunden sind, wobei die Präzisionsschnittstelle (17) als Kurzkegelverbindung ausgebildet ist und eine erste Planfläche (19) am ersten Teilwerkzeug (3) und eine zweite Planfläche (21) am zweiten Teilwerkzeug (5) aufweist, die senkrecht zu einer Mittelachse (23) des Werkzeugs (1) angeordnet sind und im zusammengebauten Zustand des Werkzeugs (1) aneinander anliegen, wobei das erste Teilwerkzeug (3) aus Stahl besteht, **dadurch gekennzeichnet, dass** das zweite Teilwerkzeug (5) geteilt ist und zwei Abschnitte (39,41) aufweist, von denen ein erster Abschnitt (39) aus Hartmetall besteht und der Präzisionsschnittstelle (17) zugeordnet ist und ein zweiter Abschnitt (41) aus einem Material besteht, das elastischer ist als das Material des ersten Abschnitts (39), und der die mindestens eine Schneide (13) des zweiten Teilwerkzeugs (5) aufweist.

2. Werkzeug nach Anspruch 1, **dadurch gekennzeichnet, dass** der zweite Abschnitt (41) aus Stahl oder Schwermetall besteht.

3. Werkzeug nach Anspruch 1 oder 2, **dadurch gekennzeichnet, dass** im Verbindungsbereich zwischen dem ersten Abschnitt (39) des zweiten Teilwerkzeugs (5) und dem zweiten Abschnitt (41) des zweiten Teilwerkzeugs (5) ein Vorsprung (47) und eine Ausnehmung (49) vorgesehen sind.

4. Werkzeug nach Anspruch 3, **dadurch gekennzeichnet, dass** der Vorsprung (47) und die Ausnehmung (49) kegel- oder kegelstumpfförmig ausgebildet sind.

5. Werkzeug nach Anspruch 3 oder 4, **dadurch gekennzeichnet, dass** der Vorsprung (47) am ersten Abschnitt (39) und die Ausnehmung (49) am zweiten Abschnitt (41) des zweiten Teilwerkzeugs (5) vorgesehen ist.

6. Werkzeug nach einem der vorhergehenden Ansprüche, **gekennzeichnet durch** einen Kühl-/Schmiermittelkanal, der das Werkzeug (1) konzentrisch zu dessen Mittelachse (23) durchläuft.

7. Werkzeug nach einem der vorhergehenden Ansprüche, **gekennzeichnet durch** eine Verteilerkammer (53) für das Kühl-/Schmiermittel, die im Verbindungsbereich der beiden Abschnitte (39,41) des zweiten Teilwerkzeugs (5) vorgesehen ist und die vom Kühl-/Schmiermittel durchströmt wird.

8. Werkzeug nach Anspruch 7, **dadurch gekennzeichnet, dass** die Verteilerkammer (53) an die Ausnehmung (49) im zweiten Abschnitt (41) des zweiten Teilwerkzeugs (5) angrenzt.

9. Werkzeug nach einem der vorhergehenden Ansprüche, **dadurch gekennzeichnet, dass** die Schneide (15) des zweiten Abschnitts (41) Teil einer Messerplatte (13) ist.

10. Werkzeug nach Anspruch 9, **dadurch gekennzeichnet, dass** die Messerplatte (13) mittels einer Spannpratze (57) am zweiten Abschnitt (41) festgespannt ist.

11. Werkzeug nach einem der Ansprüche 9 bis 10, **dadurch gekennzeichnet, dass** der Messerplatte (13) eine Justiereinrichtung (77) zugeordnet ist.

12. Werkzeug nach Anspruch 11, **dadurch gekennzeichnet, dass** die Justiereinrichtung (77) eine Stellschraube (79) und vorzugsweise einen Stellkeil (83), aufweist.

13. Werkzeug nach einem der vorhergehenden Ansprüche, **dadurch gekennzeichnet, dass** das zweite Teilwerkzeug (5) mindestens eine Führungsleiste (59) aufweist.

14. Werkzeug nach einem der vorhergehenden Ansprüche, **dadurch gekennzeichnet, dass** der erste Abschnitt (39) und der zweite Abschnitt (41) des zweiten Teilwerkzeugs (5) je mindestens eine Führungsleiste (59,59') aufweisen.

15. Werkzeug nach Anspruch 13 oder 14, **dadurch gekennzeichnet, dass** die mindestens eine Führungsleiste des zweiten Abschnitts (41) zweigeteilt ist.

16. Werkzeug nach einem der vorhergehenden Ansprüche, **dadurch gekennzeichnet, dass** der zweite Abschnitt (41) eine der Schneide (15) - in Drehrichtung gesehen - nacheilende Führungsleiste (71) aufweist, wobei die Führungsleiste vorzugsweise um ca. 45° nacheilt.

17. Werkzeug nach einem der vorhergehenden Ansprüche, **dadurch gekennzeichnet, dass** der zweite Abschnitt (41) eine der Schneide (15) gegenüberliegende Führungsleiste (73) aufweist.

18. Werkzeug nach einem der vorhergehenden Ansprüche, **dadurch gekennzeichnet, dass** der zweite Abschnitt (41) eine der Schneide (15) um ca. 270° nacheilende Führungsleiste (59") aufweist.

19. Werkzeug nach einem der vorhergehenden Ansprüche, **dadurch gekennzeichnet, dass** die Breite der Führungsleisten verschieden ist.

## Claims

1. Valve seat and valve guide machining tool for fine machining valve seat and valve guide in a cylinder head of a combustion engine, having at least two tool parts (3, 5) of which a first has at least a geometrically defined blade (11) and is assigned to machining the valve seat, and a second has at least a geometrically defined blade (15) and is assigned to machining the valve guide, which are connected by a precision interface (17), wherein the precision interface (17) is configured as a truncated cone connection and has a first flat surface (19) on the first part of the tool (3) and a second flat surface (21) on the second part of the tool (5) which are positioned perpendicular to a center axis (23) of the tool (1) and in the assembled state of the tool (1) abut each other, wherein the first part of the tool (3) consists of steel, **characterized in that** the second part of the tool (5) is divided and has two sections (39, 41) of which a first section (39) consists of carbide and is assigned to the precision interface (17) and a second section (41) consists of a material which is more ductile than the material of the first section (39) and which has at least one blade (13) of the second part of the tool (5).

2. Tool according to claim 1, **characterized in that** the second section (41) consists of steel or heavy metal.

3. Tool according to claim 1 or 2 **characterized in that** a projection (47) and a recess (49) are provided in the connecting area between the first section (39) of the second part of the tool (5) and the second section (41) of the second part of the tool (5).

4. Tool according to claim 3, **characterized in that** the projection (47) and the recess (49) are configured as a cone or a truncated cone.

5. Tool according to claim 3 or 4, **characterized in that** the projection (47) is provided on the first section (39) and the recess (49) on the second section (41) of the second part of the tool (5).

6. Tool according to one of the preceding claims, **characterized in that** a coolant/lubricant passage runs through the tool (1) concentric to its center axis (23).

7. Tool according to one of the preceding claims, **characterized in that** coolant/lubricant flows through a distribution chamber (53) for the coolant/lubricant which is provided in the area joining the two sections (39, 41) of the second part of the tool (5).

8. Tool according to claim 7, **characterized in that** the distribution chamber (53) borders the recess (49) in the second section (41) of the second part of the tool (5).

9. Tool according to one of the preceding claims, **characterized in that** the blade (15) of the second section (41) is part of a cutting plate (13).

10. Tool according to claim 9, **characterized in that** the cutting plate (13) is tightened by a chucking jaw (57) on the second section (41).

11. Tool according to one of the claims 9 to 10, **characterized in that** an adjusting mechanism (77) is assigned to the cutting plate (13).

12. Tool according to claim 11, **characterized in that** the adjusting mechanism (77) has an adjusting screw (79) and preferably an adjusting wedge (83).

13. Tool according to one of the preceding claims, **characterized in that** the second part of the tool (5) has at least one guide bead (59).

14. Tool according to one of the previous claims, **characterized in that** the first section (39) and the second section (41) of the second part of the tool (5) have at least one guide bead (59, 59') each.

15. Tool according to claim 13 or 14, **characterized in that** the at least one guide bead of the second section (41) is divided in two.

16. Tool according to one of the preceding claims, **characterized in that** the second section (41) has a guide bead (71) following the blade (15) - as viewed in the direction of rotation - wherein the guide bead preferably follows at approximately 45°.

17. Tool according to one of the preceding claims, **characterized in that** the second section (41) has a guide bead (73) positioned opposite the blade (15).

18. Tool according to one of the preceding claims, **characterized in that** the second section (41) has a guide bead (59") following the blade (15) by approximately 270°.

19. Tool according to one of the preceding claims, **characterized in that** the width of the guide beads is different.

## Revendications

1. Outil d'usinage de siège de soupape et de guide de soupape pour l'usinage de finition de siège de soupape et de guide de soupape dans une tête de cylindre d'un moteur à combustion interne, comprenant au moins deux outils partiels (3, 5), dont un premier présente au moins un tranchant (11) défini géométriquement et est associé à l'usinage du siège de soupape et un deuxième présente au moins un tranchant (15) défini géométriquement et est associé à l'usinage du guide de soupape, qui sont reliés entre eux par l'intermédiaire d'une interface de précision (17), l'interface de précision (17) réalisée sous la forme d'un raccord conique court présentant une première surface plane (19) sur le premier outil partiel (3) et une deuxième surface plane (21) sur le deuxième outil partiel (5) qui sont disposées perpendiculairement à un axe médian (23) de l'outil (1) et s'appuient l'une contre l'autre lorsque l'outil (1) est assemblé, le premier outil partiel (3) étant réalisé en acier, **caractérisé en ce que** le deuxième outil partiel (5) est divisé et présente deux segments (39, 41) dont un premier segment (39) est réalisé en métal dur et est associé à l'interface de précision (17) et un deuxième segment (41) est réalisé dans un matériau qui est plus élastique que le matériau du premier segment (39) et qui présente le au moins un tranchant (13) du deuxième outil partiel (5).

2. Outil selon la revendication 1, **caractérisé en ce que** le deuxième segment (41) est réalisé en acier ou en métal lourd.

3. Outil selon la revendication 1 ou 2, **caractérisé en ce qu'**une saillie (47) et un évidement (49) sont prévus dans la zone de jonction entre le premier segment (39) du deuxième outil partiel (5) et le deuxième segment (41) du deuxième outil partiel (5).

4. Outil selon la revendication 3, **caractérisé en ce que** la saillie (47) et l'évidement (49) sont de forme conique ou tronconique.

5. Outil selon la revendication 3 ou 4, **caractérisé en ce que** la saillie (47) est prévue sur le premier segment (39) et l'évidement (49) sur le deuxième segment (41) du deuxième outil partiel (5).

6. Outil selon l'une des revendications précédentes, **caractérisé par** un canal de fluide de refroidissement/lubrification qui traverse l'outil (1) de manière concentrique à l'axe médian (23) de celui-ci.

7. Outil selon l'une des revendications précédentes, **caractérisé par** une chambre de distribution (53) pour le fluide de refroidissement/lubrification qui est prévue dans la zone de jonction entre les deux segments (39, 41) du deuxième outil partiel (5) et est traversée par le fluide de refroidissement/lubrification.

8. Outil selon la revendication 7, **caractérisé en ce que** la chambre de distribution (53) est contiguë à l'évidement (49) dans le deuxième segment (41) du deuxième outil partiel (5).

9. Outil selon l'une des revendications précédentes, **caractérisé en ce que** le tranchant (15) du deuxième segment (41) fait partie d'une plaquette de coupe (13).

10. Outil selon la revendication 9, **caractérisé en ce que** la plaquette de coupe (13) est fixée sur le deuxième segment (41) au moyen d'une griffe de serrage (57).

11. Outil selon l'une des revendications 9 à 10, **caractérisé en ce qu'**un dispositif d'ajustage (77) est associé à la plaquette de coupe (13).

12. Outil selon la revendication 11, **caractérisé en ce que** le dispositif d'ajustage (77) présente une vis de réglage (79) et de préférence une clavette de réglage (83).

13. Outil selon l'une des revendications précédentes, **caractérisé en ce que** le deuxième outil partiel (5) présente au moins une barre de guidage (59).

14. Outil selon l'une des revendications précédentes, **caractérisé en ce que** le premier segment (39) et le deuxième segment (41) du deuxième outil partiel (5) présentent chacun au moins une barre de guidage (59, 59').

15. Outil selon la revendication 13 ou 14, **caractérisé en ce que** la au moins une barre de guidage du deuxième segment (41) est divisée en deux.

16. Outil selon l'une des revendications précédentes, **caractérisé en ce que** le deuxième segment (41) présente une barre de guidage (71) décalée en arrière du tranchant (15) quand on regarde dans le sens de rotation, la barre de guidage étant décalée en arrière de préférence d'environ 45°.

17. Outil selon l'une des revendications précédentes, **caractérisé en ce que** le deuxième segment (41) présente une barre de guidage (73) opposée au tranchant (15).

18. Outil selon l'une des revendications précédentes, **caractérisé en ce que** le deuxième segment (41) présente une barre de guidage (59") décalée en arrière du tranchant (15) d'environ 270°.

19. Outil selon l'une des revendications précédentes, **caractérisé en ce que** la largeur des barres de guidage est différente.
